# EUROPÄISCHE PATENTSCHRIFT

(11) **EP 0 342 489 B1**
(45) Veröffentlichungstag und Bekanntmachung des Hinweises auf die Patenterteilung: **11.08.1993**
(21) Anmeldenummer: 89108359.4
(22) Anmeldetag: 10.05.1989
(51) Int. Cl.: B60T 17/00, F16K 49/00

(54) **Steuergehäuse für eine Luftbremsanlage in Fahrzeugen**
Control housing for an air brake installation in vehicles
Boîte de commande pour une installation de freinage à air sur véhicules

(30) Priorität: 11.05.1988 DE 3816174
(43) Veröffentlichungstag der Anmeldung: 23.11.1989
(73) Patentinhaber: KNECHT FILTERWERKE GMBH, D-70376 Stuttgart (DE)
(72) Erfinder: Gebert, Hans, D-7100 Heilbronn-Böckingen (DE); Haller, Peter, D-7101 Löwenstein (DE); Buchlaub, Norbert, D-6729 Hagenbach (DE); Bolender, Franz, D-6744 Kandel (DE)
(74) Vertreter: Pfusch, Volker, Dipl.-Ing.

(56) Entgegenhaltungen:
- DE-A- 3 213 143
- US-A- 2 556 557

## Beschreibung

Die Erfindung betrifft ein Steuergehäuse für eine Luftbremsanlage in Fahrzeugen nach dem Oberbegriff des Patentanspruchs 1.

Bei bekannten Luftbremsanlagen in Kraftfahrzeugen, insbesondere in Lastwagen, ist es bekannt, Luft anzusaugen, diese zu verdichten und über einen Luftentfeuchter mit Granulatfüllung zu einem Vorratsbehälter zu leiten. Dort entsteht nunmehr ein Überdruck, der teilweise über ein Ventil an die Umgebung abgelassen wird. Über dieses Ventil erfolgt somit auch die Entfeuchtung des Granulats in dem Luftentfeuchter.

Es ist bekannt, bei einem solchen Ventil einen Kolben als Verschlußteil vorzusehen, der aufgrund des Überdrucks sich zum Öffnen des Ventils von dem Sitz des Ventiles abhebt. Hierdurch wird ein Bypass geöffnet und die Behälterluft wird an die Atmosphäre abgeführt.

Bei diesen Steuergehäusen ist es aufgrund der in der Luft enthaltenen Feuchtigkeit bei geringen Temperaturen als Gefahr anzusehen, daß das Steuergehäuse und das betreffende Ventil derart kalt werden, daß eine Vereisung des Ventilverschlußteiles möglich wird, wodurch das Ventil seine Entlüftungsfunktion verliert. Hierdurch wird ein Versagen der Luftbremsanlage bewirkt, so daß die Bremswirkung des Fahrzeuges zu Null wird. Zur Vermeidung dieser Gefahr ist es bereits bekannt, die Steuergehäuse im Bereich des vereisungsgefährdeten Ventils zu beheizen.

Die Heizenergie fließt bei dieser bekannten Ausführung in das gesamte Steuergehäuse ab, wodurch eine sehr hohe Heizleistung notwendig ist.

Hiervon ausgehend liegt der Erfindung die Aufgabe zugrunde, eine Ventilbeheizung zu schaffen, bei der mit geringerer Heizleistung eine Ventilvereisung auf sichere Weise vermieden werden kann.

Gelöst wird diese Aufgabe durch eien Ventilheizung nach den kennzeichnenden Merkmalen des Patentanspruchs 1.

Bei einer konkreten Ausgestaltung der Erfindung kann ein als Ventilverschlußteil dienender Kolben ausgehöhlt und im Inneren mit einem an sich bekannten Kaltleiter PTC-Heizelement bestückt werden, wobei das Heizelement mit einer in den Kolben eingeführten wärmeleitenden Vergußmasse fixiert wird. Hier wird das vereisungsgefährdete Verschlußteil selbst und in erster Linie nur dieses erwärmt. Die kleine Masse des als Verschlußteil dienenden Kolbens erfordert lediglich eine kleine Heizenergie, die bei etwa 20 Watt liegen kann.

Durch das erwärmte Verschlußteil wird der gesamte vereisungsgefährdete Bereich des Ventiles inclusive des Ventilsitzes gezielt auf eine solche Temperatur gebracht, daß keine Vereisung mehr möglich ist.

Die erfindungsgemäße Verwendung eines PTC-Heizelementes ermöglicht es, auch bei wärmeren Temperaturen, d.h. im Sommer, das Element so belassen zu können wie es ist. Ein PTC-Heizelement ist nämlich gleichzeitig auch ein Regelelement, so daß kein zusätzliches Regelelement für die Heizleistung vorgesehen sein muß. Damit kann das PTC-Heizelement auch bei Sommerbetrieb in seiner Heizfunktion belassen werden, da es sich den jeweils herrschenden Temperaturen in seiner Leistung anpaßt.

Aus US 25 56 557 ist zwar bereits ein Durchflußventil für Flüssigkeiten mit zähen Anteilen, die bei den normalen Arbeitstemperaturen grundsätzlich zu einem Verstopfen des Ventils führen, bekannt. Deshalb ist dieses grundsätzlich nur in beheiztem Zustand funktionsfähig. Die Heizung muß dort allerdings getrennt eingeschaltet werden, d.h. sie schaltet sich nicht selbsttätig ein. Diese Problematik ist mit derjenigen nach der Erfindung in keiner Weise vergleichbar, weshalb der Inhalt jener US-Schrift als gattungsfremd gegenüber der Erfindung angesehen werden muß.

Bei dem erfindungsgemäßen Gegenstand, nämlich dem Entlüftungsventil eines Steuergehäuses für eine Luftbremsanlage, ist das Ventil bei normaler Umgebungstemperatur an sich im Gegensatz zu dem vorgenannten bekannten Ventil im Prinzip unbeheizt voll funktionsfähig. Die Funktionsfähigkeit ist lediglich bei Betriebstemperaturen gestört, die unterhalb des Gefrierpunktes von Wasser liegen, da dann eine Vereisung innerhalb des Ventiles erfolgen kann.

Im Gegensatz zu der Vorrichtung nach US 25 56 557 weist die erfindungsgemäße Ausführung damit in erster Linie den Vorteil auf, ein Heizelement für das Verschlußteil des Entlüftungsventiles zur Verfügung zu haben, das ohne zusätzliche Steuerimpulse von außen bei gleichbleibendem Anschluß an eine Stromquelle nur dann und nur in einem solchen Umfang Wärme erzeugt, wie es durch die Betriebstemperatur zur Vermeidung einer Vereisung unbedingt notwendig ist.

Eine solche Lösung ist nur mit dem nach der Erfindung vorgeschlagenen PTC-Heizelement möglich. Denn die Eigenschaft eines PTC-Elementes ist es, mit zunehmender Temperatur den inneren Stromwiderstand bis auf einen Wert zu erhöhen, der einen Stromfluß ganz unterbindet. Auf diese Weise kann die PTC-Heizung immer eingeschaltet bleiben, währed sie effektiv nur dann heizt, wenn dies aufgrund der umgebenden Betriebstemperatur tatsächlich notwendig ist und dann nur in einem solchen Maße, wie es zur Aufrechterhaltung der Funktionstüchtigkeit durch Vermeidung einer Eisbildung unbedingt erforderlich ist.

Aus DE-A 32 13 143 ist es ferner an sich bereits bekannt, durch den Einsatz eines PTC-Elementes in einer elektrischen Heizung die Heiztemperatur auf einen bestimmten maximalen Wert, bei dem die PTC-Elemente den Heizstrom reduzieren bzw. ganz abstellen, einzustellen. Die elektrische Heizung selbst muß jedoch, damit sie wirksam wird, eingeschaltet werden. Erst dann, wenn die elektrische Heizung eingeschaltet ist, erfüllen die PTC-Elemente dort ihre ihnen immanente Funktion einer Stromstärkenregelung.

Obwohl auch bei der erfindungsgemäßen Anwendung von dieser systemimmanenten Funktion der PTC-Elemente Gebrauch gemacht wird, erfüllen die PTC-Elemente darüber hinaus bei der Erfindung noch eine gänzlich andere zusätzliche Funktion. Diese zusätzliche Funktion besteht darin, daß die PTC-Elemente ein Einschalten bzw. Wirksamwerden der elektrischen Heizung automatisch auslösen, d.h. bei der Erfindung schaltet sich durch entsprechenden Einsatz der PTC-Elemente die Heizung selbsttätig ein, wenn es zur Vermeidung einer Vereisung des Ventils notwendig ist. Wenn ein Heizen erforderlich ist, sorgen die PTC-Elemente zusätzlich gemäß ihrer an sich aus dem Stand der Technik bekannten Funktion noch dafür, daß eine bestimmte Heiztemperatur nicht überschritten wird. Letztere bekannte Funktion stellt bei der erfindungsgemäßen Anwendung jedoch nur eine Nebenfunktion dar, während die Hauptfunktion darin besteht, die Heizung dann auszulösen, wenn es zur Vermeidung einer Vereisung notwendigt ist.

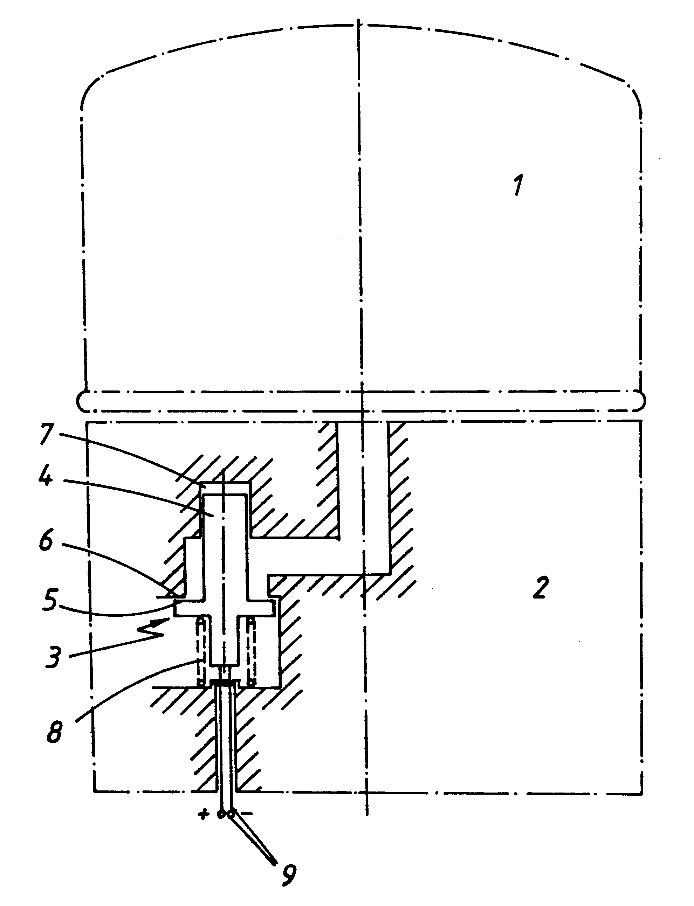

Ein Ausführungsbeispiel ist schematisch in der Zeichnung dargestellt.

In einem mit einem Luftentfeuchter 1 verbundenen Steuergehäuse 2 befindet sich das Entlüftungsventil 3, das vor Vereisung geschützt werden soll. Das Verschlußteil dieses Ventiles wird von einem Kolben 4 gebildet, der mit einem kragenförmig angeformten Ventilteller 5 durch Anlage an einen Ventilsitz 6 das Ventil verschließt. Geführt wird der Kolben 4 in einer Bohrung 7. Der für das Schließen des Ventiles erforderliche Druck auf den Kolben 4 wird von einer Feder 8 ausgeübt.

Im Inneren des Kolbens 4 ist mit Hilfe einer wärmeleitfähigen Gußmasse ein PTC-Heizelement (in der Zeichnung nicht sichtbar) eingesetzt. Die Zuleitungen 9 für das PTC-Heizelement werden durch das Steuergehäuse hindurch zu einer Stromquelle geführt. Bei den Dichtflächen des Ventiles ist zumindest eine der gegenüberliegenden Flächen in der Regel mit einem nichtmetallischen und damit schlecht wärmeleitfähigen Dichtmaterial versehen. Dadurch wird die in den Kolben 4 eingeführte Heizenergie weitestgehend daran gehindert, in die übrigen Teile des Steuergehäuses abzufließen. Der Kolben 4 kann auch in der Bohrung 7 unter Zwischenschaltung eines nichtmetallischen Werkstoffes so geführt werden, daß auch dort Heizenergie nur in sehr geringem Maße an das übrige Steuergehäuse entweichen kann. Der Kolben 4 selbst ist dagegen aus einem möglichst gut wärmeleitenden Material herzustellen.

## Patentansprüche

1. Steuergehäuse für eine Luftbremsanlage in Fahrzeugen mit einem Entlüftungsventil (3) aus einem fest in das Gehäuse (2) integrierten Ventilsitz und einem beweglichen Verschlußteil (4), insbesondere einem Kolben,
dadurch **gekennzeichnet,**
daß in das Verschlußteil (Kolben 4) ein Kaltleiter- PTC-Heizelement eingesetzt und über Zuleitungen (9) mit einer außerhalb liegenden Stromquelle verbunden ist, von der aus selbsttätig Heizstrom ausschließlich unterhalb einer an dem PTC-Heizelement anliegenden Temperatur fließt, so daß eine Vereisung vermieden werden kann.

## Claims

1. Control casing for an air brake installation in automobiles, comprising a venting valve (3) consisting of a valve seating integrated firmly into the casing (2) and of a movable closure component (4), especially a piston, characterized in that a cold conductor PTC heating element is inserted into the closure component (piston 4) and is connected by feed lines (9) to an electrical source situated outside, from which electrical heating current automatically flows only below a temperature present at the PTC heating element, so that icing-up can be avoided.

## Revendications

1. Boîte de commande pour installation de freinage pneumatique de véhicule comportant une soupape d'évacuation d'air (3) constituée d'un siège intégré à la boîte (2) et d'un obturateur mobile (4), en particulier un piston, caractérisée par le fait qu'un élément chauffant à coefficient de température positif conducteur à froid est monté dans l'obturateur (piston 4) et relié par des fils d'alimentation (4) à une source extérieure de courant d'où part automatiquement du courant de chauffage uniquement au-dessous d'une certaine température de l'élément chauffant à coefficient de température positif, ce qui permet d'éviter le givrage.
